# EUROPÄISCHE PATENTSCHRIFT

(11) **EP 2 936 013 B1**
(45) Veröffentlichungstag und Bekanntmachung des Hinweises auf die Patenterteilung: **30.11.2016**
(21) Anmeldenummer: 13803014.3
(22) Anmeldetag: 12.12.2013
(51) Int. Cl.: F25D 23/02

(54) **TÜR FÜR EIN HAUSHALTSKÄLTEGERÄT MIT EINEM VAKUUMISOLATIONSELEMENT MIT UMGOSSENEN SCHALEN SOWIE HAUSHALTSKÄLTEGERÄT**
DOOR FOR A HOUSEHOLD REFRIGERATION APPLIANCE COMPRISING A VACUUM INSULATING ELEMENT WITH CASTED SHELLS AND HOUSEHOLD REFRIGERATION APPLIANCE
PORTE POUR APPAREIL MÉNAGER DE PRODUCTION DE FROID POURVU D'UN ÉLÉMENT D'ISOLATION SOUS VIDE À COQUES COULÉES, ET APPAREIL MÉNAGER DE PRODUCTION DE FROID

(30) Priorität: 18.12.2012 DE 102012223539
(43) Veröffentlichungstag der Anmeldung: 28.10.2015
(73) Patentinhaber: BSH Hausgeräte GmbH, 81739 München (DE)
(72) Erfinder: EHNINGER, Christian, 89537 Giengen an der Brenz (DE); SEELMEIER, Michael, 73572 Heuchlingen (DE); STELZER, Jörg, 89537 Giengen (DE)
(86) Internationale Anmeldenummer: PCT/EP2013/076388
(87) Internationale Veröffentlichungsnummer: WO 2014/095569

(56) Entgegenhaltungen:
- WO-A2-2010/127947
- US-A- 2 710 993

## Beschreibung

Die Erfindung betrifft eine Tür für ein Haushaltskältegerät mit einem Vakuumisolationselement mit einer Hülle, welche einen evakuierten Hohlraum umschließt. Der Hohlraum ist zumindest teilweise mit einem Stützkörper gefüllt. Die Hülle weist eine Innenschale und eine Außenschale auf, wobei die Außenschale durch ein die Tür frontseitig abschließendes Abschlussteil gebildet ist. Des Weiteren betrifft die Erfindung ein Haushaltskältegerät mit einer derartigen Tür.

Bei Haushaltskältegeräten, wie beispielsweise einem Kühlgerät oder einem Gefriergerät oder einem Kühl-Gefrier-Kombigerät wird ein Innenraum, in dem Kältegut in Form von Lebensmitteln, die Speisen und Getränke umfassen, durch Wandungen begrenzt. Dazu kann ein Innenbehälter vorgesehen sein, der frontseitig eine Öffnung aufweist, die durch eine Tür verschließbar ist. Auch die Tür stellt in dem Zusammenhang eine Wandung dar.

Die thermischen Isolationskörper können in unterschiedlicher Ausgestaltung vorgesehen sein. So ist bekannt, dass ein Isolationsschaum vorgesehen ist. Ebenso sind bei neueren Ausgestaltungen Vakuumisolationselemente bekannt. So ist beispielsweise aus der WO 2012/031885 A2 ein Gehäuse für ein Kältegerät bekannt, bei dem ein Isolationskörper durch eine äußere und eine innere Schale begrenzt ist und in einem Zwischenraum zwischen den Schalen eine Isolationsmaterialpackung angeordnet ist. Das Isolationsmaterial kann beispielsweise ein hochporöser Feststoff sein.

Aus der DE 10 2009 002 800 A1 ist ein Haushaltskältegerät und eine wärmeisolierende Wandung dafür bekannt. Bei dieser Ausgestaltung kann der Isolationskörper zwei Schalen bzw. Häute aufweisen, zwischen denen wiederum ein Hohlraum ausgebildet ist, der evakuiert sein kann. Bei einer Ausführung kann vorgesehen sein, dass eine Haut dieses Isolationskörpers selbst einen eckigen Rahmen aufweist, an dem dann eine plattenartige Innenhaut und eine Außenhaut befestigt sind, so dass dadurch eine Gesamthülle für den Isolationskörper gebildet ist.

Aus der DE 10 2009 002 800 A1 ist auch bekannt, dass eine Innenschale mit einer metallenen Außenschale eines Vakuumisolationselements durch Kleben und Schweißen verbindbar ist. Diesbezüglich können teilweise nur eingeschränkte Verbindungen erzielt werden und gerade bei komplexen Geometrien die Verbindungsstellen nicht umfassend ausgebildet werden.

Darüber hinaus beschreibt die US 2 710 993 A eine isolierte Türstruktur, die beispielsweise für einen Kühlschrank verwendet werden kann. Die Türstruktur weist eine äußere Schale und eine dazu beabstandete innere Wand auf, wobei ein Raum zwischen der äußeren Schale und der inneren Wand evakuiert ist. Ferner ist eine atmosphärische Isolation vorgesehen, welche um die Außenfläche der äußeren Schale und die Kanten der inneren Wand angeordnet ist. Diese atmosphärische Isolation kann beispieslweise eine Glasfaserisolation sein.

Es ist Aufgabe der vorliegenden Erfindung, eine Tür für ein Haushaltskältegerät sowie ein derartiges Haushaltskältegerät zu schaffen, bei welchen die Verbindung einer Innenschale und einer Außenschale eines Vakuumisolationselements verbessert ist.

Diese Aufgabe wird durch eine Tür und ein Haushaltskältegerät gemäß den unabhängigen Ansprüchen gelöst.

Eine erfindungsgemäße Tür für ein Haushaltskältegerät umfasst zumindest ein Vakuumisolationselement. Das Vakuumisolationselement weist eine Hülle auf, welche einen evakuierten Hohlraum umschließt. Dieser Hohlraum ist zumindest teilweise mit einem Stützkörper gefüllt, wobei die Hülle eine Innenschale und eine Außenschale aufweist. Die Außenschale ist durch ein die Tür frontseitig abschließendes Abschlussteil gebildet. Ein wesentlicher Gedanke der Erfindung ist darin zu sehen, dass die Innenschale und dieses Abschlussteil an den Verbindungsstellen durch ein Vergießen bzw. Umgießen verbunden sind. Für eine derartige spezifizierte Verbindung ist gerade bei Vakuumisolationselementen eine hochdichte Ausgestaltung erreicht. Gerade an diesen Schnittstellen, an denen die Innenschale mit dem Abschlussteil anliegt, ist durch dieses Umgießen bzw. Vergießen die Verbindung auch mechanisch hochstabil gestaltet. Zudem ist vorgesehen, dass die Innenschale Anlageflansche aufweist, die an einer Innenseite des Abschlussteils anliegen. Die Anlageflansche sind von der Vergussmasse umgeben. Durch diese Ausgestaltung ist eine besonders umfängliche Verschließung dieser Schnittstelle zwischen der Innenschale und dem Abschlussteil erreicht, so dass die mechanische Stabilität und insbesondere auch die Gasdichtigkeit besonders hervorzuheben ist. Derartiges ist nur mit einem Umgießen möglich, und bei herkömmlichen Ausgestaltungen nicht durchführbar.

Darüber hinaus ist vorgesehen, dass die Vergussmasse ein Kunstharz oder ein Flüssigklebstoff ist. Dadurch kann die mechanisch stabile Ausbildung der Verbindung ebenso verbessert erreicht werden, wie der gasdichte Abschluss. Darüber hinaus ist durch diese Spezifikation der Vergussmasse auch das Einbringen in den vorzugsweise ausgebildeten Aufnahmeraum sehr zielführend und auch im Hinblick auf die Menge sehr definiert möglich. Auch an schwerer zugänglichen Stellen im Aufnahmeraum kann somit die Vergussmasse einfach und dennoch ohne Hohlräume eingebracht werden.

Vorzugsweise ist vorgesehen, dass die Anlageflansche an Seitenrändern und/oder Hinterseiten von der Vergussmasse umgeben sind. Dadurch sind die Anlageflansche quasi mehrseitig in die Vergussmasse eingebettet, wodurch die oben genannten Vorteile nochmals begünstigt werden.

Vorzugsweise ist vorgesehen, dass das Abschlussteil an den Seitenrändern nach hinten orientierte Umformungen aufweist, die die Anlageflansche hintergreifen. Dadurch werden die Anlageflansche seitlich und von hinten geschützt.

Insbesondere ist vorgesehen, dass zwischen den Anlageflanschen und den Umformungen ein seitlich und nach hinten begrenzter Aufnahmeraum ausgebildet ist, in den die Vergussmasse eingebracht ist. Dadurch wird einerseits ein Raum begrenzt, der für die Vergussmasse vorgesehen ist, so dass diese nicht unerwünschterweise beim Umgießen der Anlageflansche in unerwünschte Stellen tritt oder die Anlageflansche sogar nicht umgießen würde. Durch diesen Aufnahmeraum wird auch im Hinblick auf die Dosierung der Vergussmasse ein wesentlicher Vorteil erreicht, da auch ganz gezielt diese Vergussmasse örtlich, insbesondere seitlich und/oder an den Hinterseiten der Anlageflansche angebracht werden kann, so dass das vollständige Einbetten der Anlageflansche in die Vergussmasse besonders begünstigt ist. Durch diese Umformungen und den dadurch gebildeten Aufnahmeraum kann auch ein sehr gezieltes Auffüllen von diesem Aufnahmeraum mit Vergussmasse erfolgen, so dass auch hier die Dicke des Umgießens sehr definiert ausgebildet werden kann.

Vorzugsweise ist vorgesehen, dass der Aufnahmeraum über die gesamte Breite und beabstandet zu hinteren Umformteilen mit der Vergussmasse gefüllt ist. Die oben genannten Vorteile werden dadurch bekräftigt.

Vorzugsweise ist vorgesehen, dass in die Vergussmasse zumindest ein separates Funktionsbauteil bereichsweise mit eingegossen ist. Dadurch wird die Vergussmasse multifunktionell verwendet, indem sie einerseits zum Verbinden der Innenschale mit der Außenschale bzw. dem Abschlussteil vorgesehen ist, andererseits auch eine gewisse Trägerfunktionalität aufweist.

Vorzugsweise ist vorgesehen, dass der Stützkörper Glasfasern und/oder Perlite und/oder Kieselsäure und/oder ein Schaummaterial als thermisches Isolationsmaterial aufweist.

Vorzugsweise ist vorgesehen, dass die Innenschale aus einer mehrlagigen Folie oder einer Folie mit einer metallischen Barriereschicht ausgebildet ist.

Vorzugsweise ist das Abschlussteil ein Türaußenblech.

In besonders vorteilhafter Weise ist vorgesehen, dass die Tür eine Vollvakuumtür ist. Sie ist bei dieser Ausgestaltung daher so gebildet, dass sie neben Vakuumisolationselementen keine weiteren thermisch isolierenden Schaummaterialien aufweist. Lediglich das zumindest eine Vakuumisolationselement dient somit zur thermischen Isolierung. Durch eine derartige Vollvakuumtür ist bei zumindest gleichbleibender thermischer Isolationsfunktion ein kompakterer, insbesondere dünnerer Aufbau möglich. Dadurch kann das Nutzvolumen des Innenraums eines Haushaltskältegeräts, an dem die Tür angeordnet ist, erhöht werden.

Des Weiteren betrifft die Erfindung ein Haushaltskältegerät mit einer erfindungsgemäßen Tür oder einer vorteilhaften Ausgestaltung davon.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Ansicht von hinten einer als Tür ausgebildeten Wandung des Haushaltskältegeräts gemäß Fig. 1;
- Fig. 3: eine Explosionsdarstellung des Ausführungsbeispiels der Tür gemäß Fig. 2; und
- Fig. 4: eine Horizontalschnittdarstellung durch ein Ausführungsbeispiel einer erfindungsgemäßen Tür, wie sie in Fig. 2 und Fig. 3 gezeigt ist.

In den Figuren werden gleiche oder funktionsgleiche Elemente mit den gleichen Bezugszeichen versehen.

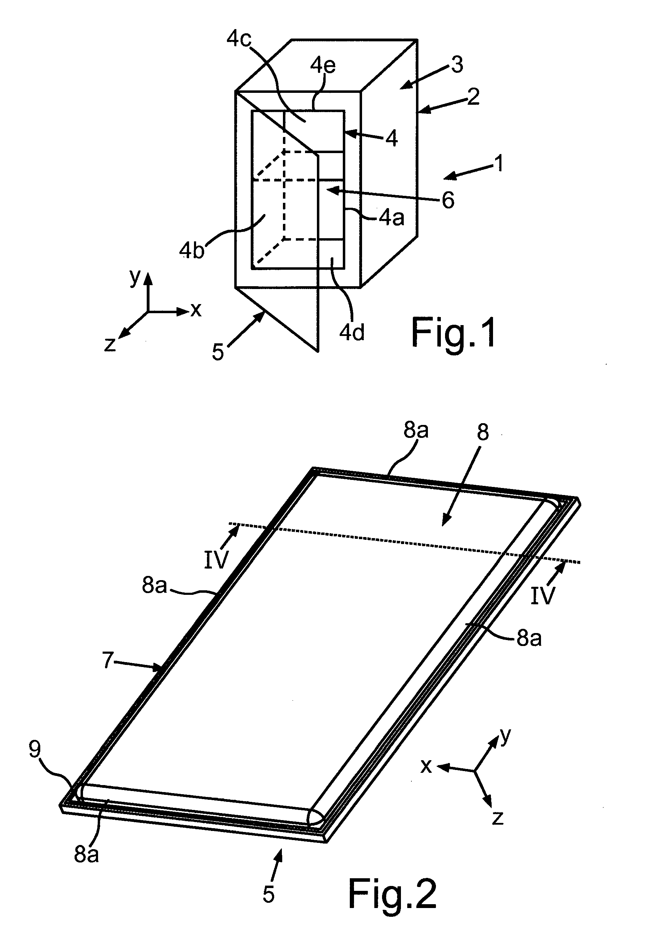

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einem Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vakuumisolationstür, insbesondere eine Vollvakuumtür, ist. Dazu ist vorgesehen, dass die Tür 5 zumindest ein Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer perspektivischen Ansicht auch eine Innenseite 7 der Tür 5 mit dem Vakuumisolationselement 8 dargestellt. Die Tür 5 umfasst neben dem plattenartigen rechteckigen Vakuumisolationselement 8 einen Trägerrahmen 9. Der Trägerrahmen 9 umgreift umfangsseitig das Vakuumisolationselement 8 vollständig. Das Vakuumisolationselement 8 ist somit von dem Trägerrahmen 9 gehalten.

Der Trägerrahmen 9 ist ebenfalls rechteckig gestaltet und mehrteilig ausgebildet. Selbstverständlich ist ebenso eine einstückige Ausbildung des Trägerrahmens 9 denkbar.

Der Trägerrahmen 9 ist darüber hinaus aus Kunststoff ausgebildet und insbesondere durch Spritzgussteile und extrudierte Kunststoffteile realisiert. Es kann vorgesehen sein, dass der Trägerrahmen 9 aus einem einzigen Kunststoffmaterial oder aus zumindest zwei unterschiedlichen Kunststoffmaterialien ausgebildet ist.

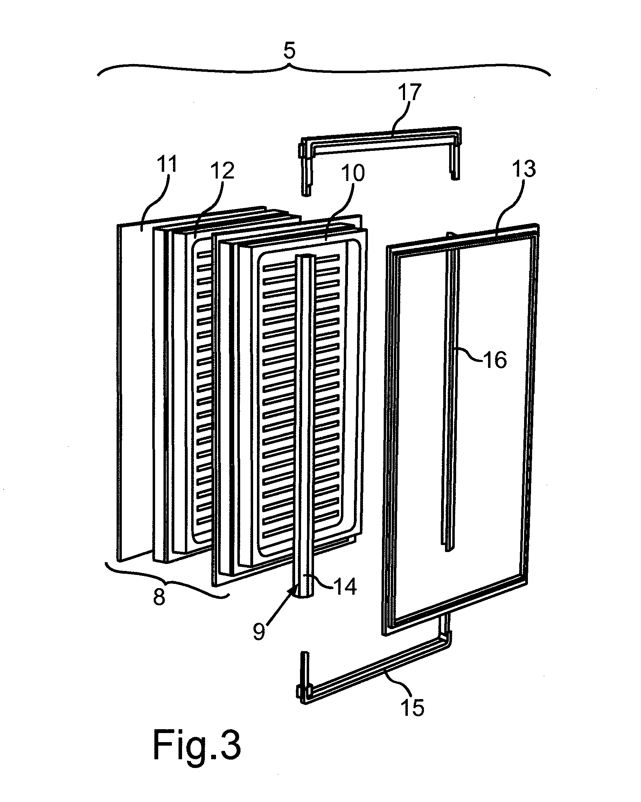

In Fig. 3 ist in einer Explosionsdarstellung die Tür 5 gezeigt.

Es ist dabei zu erkennen, dass das Vakuumisolationselement 8 eine hintere bzw. Innenschale 10 aufweist, die einstückig aus Kunststoff ausgebildet ist. Darüber hinaus umfasst das Vakuumisolationselement 8 eine vordere Schale bzw. eine Außenschale 11, welche ebenfalls einstückig aus Kunststoff ausgebildet ist. Im zusammengesetzten Zustand des Vakuumisolationselements 8 sind die beiden Schalen 10 und 11 miteinander verbunden. Beispielsweise kann hier ein Verkleben oder Verschweißen vorgesehen sein. In dem zwischen den Schalen 10 und 11 gebildeten Zwischenraum bzw. Hohlraum ist ein Füllkörper bzw. Stützkörper 12 eingebracht. Beispielsweise kann hier ein poröser Festkörper vorgesehen sein. In bevorzugter Weise ist Kieselsäure als Füllmaterial vorgesehen. Dieser Zwischenraum zwischen den Schalen 10 und 11 ist evakuiert.

Darüber hinaus ist in Fig. 3 eine umlaufende Dichtung 13 gezeigt, die im zusammengesetzten Zustand an dem Trägerrahmen 9 angeordnet ist. Der Trägerrahmen 9 ist somit multifunktionell gestaltet und zur Aufnahme mehrerer unterschiedlicher separater gegenständlicher Komponenten vorgesehen. Neben der Dichtung 13 kann darüber hinaus jedoch auch noch ein anderes Funktionsbauteil zusätzlich an dem Trägerrahmen 9 angeordnet sein. Beispielsweise können hier ein Scharnier und/oder eine Lagereinheit und/oder ein Versteifungsteil vorgesehen sein.

Im Ausführungsbeispiel umfasst der Trägerrahmen 9 durch seine rechteckige Formgebung vier Trägerrahmenteile 14, 15, 16 und 17. Die beiden Trägerrahmenteile 14 und 16, welche geradlinige längliche Bauteile sind, erstrecken sich vertikal und parallel. Ebenso erstrecken sich die horizontal angeordneten Trägerrahmenteile 15 und 17 parallel zueinander.

Die Tür 5 umfasst darüber hinaus eine außenseitige bzw. frontseitige Abdeckung 18, die beispielweise ein plattenartiges Außenblech ist.

In zumindest einem der Trägerrahmenteile 14 bis 17 kann auch integriert und somit innenliegend ein metallisches Versteifungsteil eingebettet sein. Insbesondere ist diese Integration derart, dass das metallische Versteifungsteil vollständig von dem Kunststoffmaterial des Trägerrahmenteils 14 bis 17 umschlossen ist.

Die Trägerrahmenteile 14 bis 17 können einstückig zum Trägerrahmen 9 ausgebildet sine oder als separate Teile vorhanden sein, die dann zusammengesetzt werden, bspw. durch stecken, verrasten schrauben, nieten oder kleben.

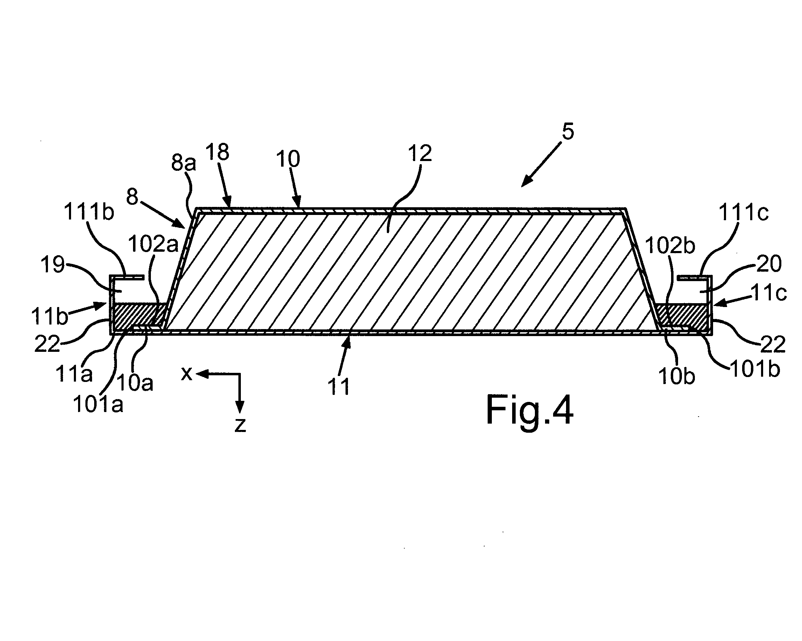

In Fig. 4 ist in einer Horizontalschnittdarstellung und somit in der x-z-Ebene die Tür 5 gemäß Fig. 2 schematisch gezeigt. Die Tür 5 umfasst den bereits genannten Vakuumisolationskörper bzw. das Vakuumisolationselement 8, wobei in einem Hohlraum 18 zwischen der Innenschale 10 und der Außenschale, die durch das Abschlussteil 11, welches das Türaußenblech ist, gebildet ist, das Füllmaterial bzw. der Stützkörper 12 angeordnet sind. Im Ausführungsbeispiel ist das Material des Stützkörpers 12 vorzugsweise Kieselsäure.

Die Innenschale 10 umfasst Anlageflansche 10a und 10b, die randseitig angeordnet sind und vorzugsweise vollständig umlaufend ausgebildet sind. Mit diesen Anlageflanschen 10a und 10b liegt die Innenschale 10 an einer Innenseite 11a des Abschlussteils 11 an.

Die Umformungen 11b und 11 c sind beabstandet zu Seitenrändern 101 a und 101b als auch zu Hinterseiten 102a und 102b der Anlageflansche 10a und 10b.

Darüber hinaus wird durch die Umformungen 11b und 11c jeweils ein Aufnahmeraum 19 und 20 begrenzt, wobei dazu hintere Begrenzungen in Form von Umformteilen 111 b und 111c beabstandet zum Umfangsrand 8a der Innenschale 10 enden. Diese Aufnahmeräume 19 und 20 sind mit einer Vergussmasse 22 gefüllt, die beispielsweise Kunstharz oder ein Flüssigklebstoff sein kann. Durch diese Vergussmasse 22 sind die Anlageflansche 10a und 10b vollständig umgossen bzw. in diese Vergussmasse eingebettet, bis auf diejenigen Flächen, die an der Innenseite 11a anliegen.

Wie aus der Darstellung in Fig. 4 zu erkennen ist, sind die Aufnahmeräume 19 und 20 bereichsweise mit der Vergussmasse 22 gefüllt, wobei die Vergussmasse auch so aufgebracht ist, dass sie somit die Seitenränder 101 a und 101b sowie die Hinterseiten 102a und 102b bedecken. Die Aufnahmeräume 19 und 20 sind in Breitenrichtung und somit in x-Richtung vollständig gefüllt.

Dadurch ist die Verbindung zwischen der Innenschale 10 und dem Abschlussteil 11 durch ein Umgießen bzw. Vergießen ausgebildet.

Es kann vorgesehen sein, dass in die Vergussmasse 22 ein zusätzliches weiteres separates Funktionsbauteil angeordnet und teilweise eingebettet ist, so dass es durch die Vergussmasse 22 gehalten ist.

Die Innenschale 10 kann vorzugsweise aus einer mehrlagigen Folie und/oder einer Folie mit einer metallischen Barriereschicht ausgebildet sein.

Die Tür 5 ist insbesondere eine Vollvakuumtür.

Insbesondere ist vorgesehen, dass die Umformungen 11b und 11c vollständig umlaufend ausgebildet sind. Insbesondere ist dann auch die Ausbildung der Aufnahmeräume 19 und 20 vollständig umlaufend vorgesehen und auch die Vergussmasse 22 vollständig umlaufend ausgebildet, wobei hierzu dies insbesondere an den Stellen der Fall ist, an denen die Anlageflansche 10a und 10b an der Innenseite des Abschlussteils 11 anliegen.

### Bezugszeichenliste

- 1: Haushaltskältegerät
- 2: Gehäuse
- 3: Außengehäuse
- 4: Innengehäuse
- 4a, 4b: Seitliche Wandungen
- 4c: Hintere Wandung
- 4d: Bodenwandung
- 4e: Deckenwandung
- 5: Tür
- 6: Innenraum
- 7: Innenseite
- 8: Vakuumisolationselement
- 8a: Umfangsrand
- 9: Trägerrahmen
- 10: Innenschale
- 10a, 10b: Anlageflansche
- 11: Abschlussteil
- 11a: Innenseite
- 11b,c: Umformungen
- 12: Stützkörper
- 13: Dichtung
- 14, 15, 16, 17: Trägerrahmenteile
- 18: Hohlraum
- 19: Aufnahmeraum
- 20: Aufnahmeraum
- 22: Vergussmasse
- 101a, 101b: Seitenränder
- 102a, 102b: Hinterseiten
- 111b, 111c: Umformteile

## Patentansprüche

1. Tür (5) für ein Haushaltskältegerät (1), mit einem Vakuumisolationselement (8) mit einer Hülle, welche einen evakuierten Hohlraum (18) umschließt, welcher zumindest teilweise mit einem Stützkörper (12) gefüllt ist, wobei die Hülle eine Innenschale (10) und einen Außenschale aufweist, und die Außenschale durch ein die Tür (5) frontseitig abschließendes Abschlussteil (11) gebildet ist, **dadurch gekennzeichnet, dass** die Innenschale (10) und das Abschlussteil (11) an Verbindungsstellen durch ein Umgießen verbunden sind, die Innenschale (10) Anlageflansche (10a, 10b) aufweist, die an einer Innenseite (11a) des Abschlussteils (11) anliegen, wobei die Anlageflansche (10a, 10b) von der Vergussmasse (22) umgeben sind und die Vergussmasse (22) ein Kunstharz oder ein Flüssigklebstoff ist.

2. Tür (5) nach Anspruch 1, **dadurch gekennzeichnet, dass** die Anlageflansche (10a, 10b) von der Vergussmasse (22) an Seitenrändern (101a, 101b) und/oder Hinterseiten (102a, 102b) von der Vergussmasse (22) umgeben sind.

3. Tür (5) nach Anspruch 1 oder 2, **dadurch gekennzeichnet, dass** das Abschlussteil (11) an den Seitenrändern nach hinten orientierte Umformungen (11b, 11 c) aufweist, die die Anlageflansche (10a, 10b) hintergreifen.

4. Tür (5) nach Anspruch 3, **dadurch gekennzeichnet, dass** die Umformungen (11b, 11c) seitlich und/oder hinter den Anlageflanschen (10a, 10b) beabstandet zu den Anlageflanschen (10a, 10b) angeordnet sind.

5. Tür (5) nach Anspruch 3 und 4, **dadurch gekennzeichnet, dass** zwischen den Anlageflanschen (10a, 10b) und den Umformungen (11 b, 11c) ein seitlich und nach hinten begrenzter Aufnahmeraum (19, 20) ausgebildet ist, in den die Vergussmasse (20) eingebracht ist.

6. Tür (5) nach Anspruch 5, **dadurch gekennzeichnet, dass** der Aufnahmeraum (19, 20) über die gesamte Breite und beabstandet zu hinteren Umformteilen (111b, 111c) mit Vergussmasse (22) gefüllt ist.

7. Tür (5) nach einem der vorhergehenden Ansprüche, **dadurch gekennzeichnet, dass** in die Vergussmasse (22) zumindest ein separates Funktionsbauteil bereichsweise eingegossen ist.

8. Tür (5) nach einem der vorhergehenden Ansprüche, **dadurch gekennzeichnet, dass** der Stützkörper (12) Glasfaser und/oder Perlite und/oder Kieselsäure und/oder ein Schaummaterial aufweist.

9. Tür (5) nach einem der vorhergehenden Ansprüche, **dadurch gekennzeichnet, dass** die Innenschale (10) aus einer mehrlagigen Folie und/oder einer Folie mit einer metallischen Barriereschicht ausgebildet ist.

10. Tür (5) nach einem der vorhergehenden Ansprüche, **dadurch gekennzeichnet, dass** das Abschlussteil (11) ein frontseitiges Türaußenblech ist.

11. Tür (5) nach einem der vorhergehenden Ansprüche, **dadurch gekennzeichnet, dass** sie eine Vollvakuumtür ist.

12. Haushaltskältegerät (1) mit einer Tür (5) nach einem der vorhergehenden Ansprüche.

## Claims

1. Door (5) for a household refrigeration appliance (1), having a vacuum insulation element (8) with a covering, which surrounds an evacuated cavity (18), which is filled at least partially with a support body (12), wherein the covering has an inner shell (10) and an outer shell, and the outer shell is formed by a closure part (11) closing the door (5) on the front side, **characterised in that** the inner shell (10) and the closure part (11) are connected at connection points by a casting, the inner shell (10) has abutment flanges (10a, 10b) which abut an interior (11a) of the closure part (11), wherein the abutment flanges (10a, 10b) are surrounded by the casting compound (22) and the casting compound (22) is a synthetic resin or a liquid adhesive.

2. Door (5) according to claim 1, **characterised in that** the abutment flanges (10a, 10b) are surrounded by the casting compound (22) at side edges (101a, 101b) and/or rear sides (102a, 102b).

3. Door (5) according to claim 1 or 2, **characterised in that** at the side edges the closure part (11) has rearward-oriented press mouldings (11b, 11c) which engage behind the abutment flanges (10a, 10b).

4. Door (5) according to claim 3, **characterised in that** the press mouldings (11b, 11c) are arranged laterally and/or behind the abutment flanges (10a, 10b) at a distance from the abutment flanges (10a, 10b).

5. Door (5) according to claim 3 and 4, **characterised in that** arranged between the abutment flanges (10a, 10b) and the press mouldings (11b, 11c) is a receiving space (19, 20) delimited laterally and rearward, into which the casting compound (20) is introduced.

6. Door (5) according to claim 5, **characterised in that** the receiving space (19, 20) is filled with casting compound (22) over the entire width and at a distance from rear press moulded parts (111b, 111c).

7. Door (5) according to one of the preceding claims, **characterised in that** at least one separate function component is in part cast into the casting compound (22).

8. Door (5) according to one of the preceding claims, **characterised in that** the support body (12) comprises glass fibre and/or perlites and/or silica and/or a foam material.

9. Door (5) according to one of the preceding claims, **characterised in that** the inner shell (10) is formed from a multi-layer foil and/or a foil having a metal barrier layer.

10. Door (5) according to one of the preceding claims, **characterised in that** the closure part (11) is a door outer panel on the front side.

11. Door (5) according to one of the preceding claims, **characterised in that** it is a full vacuum door.

12. Household refrigeration appliance (1) having a door (5) according to one of the preceding claims.

## Revendications

1. Porte (5) pour un appareil frigorifique ménager (1), avec un élément d'isolation sous vide (8) avec un habillage qui entoure une cavité mise sous vide (18), laquelle est au moins partiellement remplie avec un corps de support (12), l'habillage présentant une coque intérieure (10) et une coque extérieure, et la coque extérieure étant constituée par une pièce terminale (11) terminant la porte (5) côté avant, **caractérisée en ce que** la coque intérieure (10) et la pièce terminale (11) sont reliées par un moulage aux points de jonction, la coque intérieure (10) présente des brides d'appui (10a, 10b) contiguës à un côté intérieur (11a) de la pièce terminale (11), les brides d'appui (10a, 10b) étant entourées par la masse de moulage (22) et la masse de moulage (22) étant une résine synthétique ou une colle liquide.

2. Porte (5) selon la revendication 1, **caractérisée en ce que** les brides d'appui (10a, 10b) sont entourées par la masse de moulage (22) sur les bords latéraux (101 a, 101b) et/ou les côtés arrière (102a, 102b).

3. Porte (5) selon la revendication 1 ou 2, **caractérisée en ce que** la pièce terminale (11) présente sur les bords latéraux des déformations orientées vers l'arrière (11b, 11c) qui s'agrippent derrière les brides d'appui (10a, 10b).

4. Porte (5) selon la revendication 3, **caractérisé en ce que** les déformations (11 b, 11 c) sont disposées latéralement et/ou derrière les brides d'appui (10a, 10b), à distance des brides d'appui (10a, 10b).

5. Porte (5) selon la revendication 3 et 4, **caractérisée en ce qu'**un espace d'accueil (19, 20) limité latéralement et vers l'arrière est exécuté entre les brides d'appui (10a, 10b) et les déformations (11 b, 11 c), dans lequel la masse de moulage (20) est insérée.

6. Porte (5) selon la revendication 5, **caractérisée en ce que** l'espace d'accueil (19, 20) est rempli de masse de moulage (22) sur l'ensemble de la largeur et à distance par rapport aux pièces déformées arrière (111 b, 111 c).

7. Porte (5) selon l'une des revendications précédentes, **caractérisée en ce qu'**au moins un composant fonctionnel distinct est coulé par endroits dans la masse de moulage (22).

8. Porte (5) selon l'une des revendications précédentes, **caractérisé en ce que** le corps de support (12) présente de la fibre de verre et/ou de la perlite et/ou de la silice et/ou un matériau en mousse.

9. Porte (5) selon l'une des revendications précédentes, **caractérisée en ce que** la coque intérieure (10) est exécutée en un film à plusieurs couches et/ou un film avec une couche formant barrière métallique.

10. Porte (5) selon l'une des revendications précédentes, **caractérisée en ce que** la pièce terminale (11) présente une tôle extérieure de porte côté avant.

11. Porte (5) selon l'une des revendications précédentes, **caractérisée en ce qu'**elle est une porte intégralement sous vide.

12. Appareil frigorifique (1) avec une porte (5) selon l'une des revendications précédentes.
